(19) Europäisches Patentamt
European Patent Office
Office européen des brevets

(11) **EP 4 660 598 A1**

(12) **EUROPEAN PATENT APPLICATION**

(43) Date of publication:
**10.12.2025   Bulletin 2025/50**

(21) Application number: **24180739.5**

(22) Date of filing: **07.06.2024**

(51) International Patent Classification (IPC):
**G01K 7/22** *(2006.01)*   **G01K 7/34** *(2006.01)*
**H05B 1/00** *(2006.01)*

(52) Cooperative Patent Classification (CPC):
**G01K 7/22; G01K 7/343; H05B 1/0236;**
H05B 2203/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **MAHLE International GmbH**
**70376 Stuttgart (DE)**

(72) Inventors:
• **BLESSING, Uli Christian**
**74199 Donnbronn (DE)**
• **FRIAS, Anthony**
**46484 San Antonio de Benageber (ES)**
• **GARULO, Juan Sastre**
**46003 Valencia (ES)**
• **WANKE, Robin**
**46530 Puzol (ES)**

(74) Representative: **BRP Renaud & Partner mbB
Rechtsanwälte Patentanwälte
Steuerberater
Königstraße 28
70173 Stuttgart (DE)**

(54) **METHOD AND DEVICE FOR DETERMINING A CURRENT TEMPERATURE OF A PTC HEATER**

(57)    The invention relates to a method (1) for determining a current temperature (T) of a PTC heater (2) having at least one PTC element (3) during operation of the PTC heater (2) by means of a control unit (4). A capacitance (C) of the PTC element (3) and therefrom a capacitance-determined value of the current temperature (T) of the PTC element (3) are determined from measured characteristic values of the PTC element (3).

The invention also relates to the PTC heater (2) with at least one PTC element (3) and a control unit (4) for carrying out the method (1).

(1)

**Fig. 3**

## Description

The invention relates to a method for determining a current temperature of a PTC heater during operation of the PTC heater by means of a control unit according to the general term of claim 1. The invention also relates to the PTC heater with at least one PTC element and a control unit for carrying out the method.

A PTC heater (PTC: Positive Temperature Coefficient) usually comprises several PTC elements and can be used, for example, in a motor vehicle to heat cabin air. If the PTC heater is operated at high power, the PTC heater heats up and the materials surrounding the PTC heater can be damaged. In addition, the heated cabin air can harm the passengers. To avoid this, the PTC heaters are usually controlled by measuring or calculating the actual temperature of the PTC heater. By measuring the actual temperature of the PTC heater, temperature sensors are usually used. The temperature sensors are disadvantageously expensive and have a certain thermal inertia. By calculating the actual temperature of the PTC heater, the temperature-dependent electrical resistance of the PTC heater is measured and the actual temperature of the PTC heater is calculated therefrom using the resistance-temperature characteristic curve. Disadvantageously, the resistance-temperature characteristic curve is not linear. In particular, the resistance-temperature characteristic curve can be flat in the relevant range and thus the resistance changes slightly with increasing temperature. In this range, the temperature of the PTC heater calculated based on the electrical resistance can have a high tolerance.

The object of the invention is therefore to provide an improved or at least alternative embodiment for a method of the type described, in which the described disadvantages are overcome. The object of the invention is also to provide a PTC heater with a control unit for carrying out the method.

According to the invention, this problem is solved by the subject matter of the independent claims. Advantageous embodiments are the subject of the dependent claims.

The present invention is based on the basic idea of using the temperature-dependent permittivity of the PTC elements of the PTC heater to calculate the temperature of the PTC elements and thus of the PTC heater.

The method according to the invention is provided for determining a current temperature of a PTC heater with at least one PTC element during operation of the PTC heater by means of a control unit. During operation of the PTC heater, a pulse-width modulated input voltage is applied to the PTC heater and characteristic values of one of the PTC elements of the PTC heater are measured. According to the invention, a capacitance of the PTC element is also calculated from at least some of the characteristic values. A capacitance-determined value of the current temperature of the PTC element and thus of the PTC heater is then determined from the calculated capacitance.

In the context of the present invention, the terms "resistance-determined" and "capacitance-determined" are only used to distinguish the corresponding values of the current temperature from each other. The resistance-determined value of the current temperature may be referred to as "the first value" and the capacitance-determined value of the current temperature may be referred to as "the second value".

The respective PTC element of the PTC heater not only has a temperature-dependent electrical resistance, but also a temperature-dependent permittivity. As the permittivity is related to the capacitance of the PTC element, its current temperature can be determined based on its capacitance. In other words, the PTC element of the PTC heater is characterized not only by a unique resistance-temperature characteristic curve, but also by a unique capacitance-temperature characteristic curve. In the method according to the invention, the current temperature of the PTC element is determined based on the capacitance i.e. the capacitance-temperature characteristic curve. As a result, the current temperature of the PTC element can be determined with a high degree of accuracy over the entire operating temperature range of the PTC heater.

When determining the capacitance-determined value of the current temperature, this can be read out from a table of values determined for the PTC heater as a function of the capacitance. The table of values can be created for the PTC heater with its specific PTC elements before the PTC heater is installed i.e. operated. The capacitance and the correlating capacitance-determined values of the current temperature can be saved in the table of values. To create the table of values, the capacitance and the correlating capacitance-determined values of the current temperature can be measured, for example using measuring units, before the PTC heater is installed i.e. operated. By using the table of values, it can be ensured that the capacitance-determined value of the current temperature can be determined i.e. read out with sufficient accuracy.

Additionally, an electrical resistance of the PTC element can be calculated from at least some of the characteristic values, and a resistance-determined value of the current temperature of the PTC element and thus of the PTC heater is determined from the calculated electrical resistance. In the method, the current temperature of the PTC element can be determined based on the electrical resistance i.e. the resistance-temperature characteristic curve and based on the capacitance i.e. the capacitance-temperature characteristic curve. In this case, the current temperature of the PTC element can be determined based on two values and so with a high degree of accuracy over the entire operating temperature range of the PTC heater.

The resistance-determined value of the current temperature can be determined in a first range of the operating temperature of the PTC heater and the capacitance-determined value of the current temperature can be determined in a second range of the operating temperature of the PTC heater. There, the first range and the second range of the operating temperature of the PTC heater can overlap. In other words, the capacitance-determined value and the resistance-determined value of the current temperature can be determined in ranges that differ from one another. For example, the capacitance-determined value can be determined in addition to the resistance-determined value in the range in which the resistance-temperature characteristic curve is flat and the resistance-determined value can only be determined with a high tolerance. Since the resistance-temperature characteristic curve and the capacitance-temperature characteristic curve of the same PTC element differs, the capacitance-determined value in this range can be determined with a comparatively smaller tolerance than the resistance-determined value and thus the tolerance can be reduced overall by determining the current temperature in this range. The first range and the second range can be defined before the PTC heater is installed i.e. used and depending on the properties of the PTC heater i.e. the PTC element.

The resistance-determined value of the current temperature can be determined in the entire range of the operating temperature of the PTC heater. The capacitance-determined value of the current temperature can then be determined in a range of the operating temperature of the PTC heater in which a tolerance of the resistance-determined value of the current temperature exceeds a predefined tolerance value. Depending on the properties of the PTC heater i.e. the PTC element, this range can already be defined before the PTC heater is installed i.e. used. The capacitance-determined value of the current temperature can therefore be determined in the range in which the resistance-temperature characteristic is flat and the resistance-determined value can only be determined with a high tolerance. Since the resistance-temperature characteristic curve and the capacitance-temperature characteristic curve of the same PTC element differs, the capacitance-determined value in this range can be determined with a comparatively smaller tolerance than the resistance-determined value and thus the tolerance can be reduced overall by determining the current temperature in this range.

The operating temperature of the PTC heater is the temperature which the PTC heater i.e. its PTC elements can have during operation of the PTC heater. For example, the operating temperature can vary between -25°C (by starting operation of the PTC heater) and 200°C (by operating the PTC heater at maximum heating power).

When determining the resistance-determined value of the current temperature, this can be read out from a table of values determined for the PTC heater as a function of the electrical resistance. The table of values can be created for the PTC heater with its specific PTC elements before the PTC heater is installed i.e. operated.

The electrical resistances and the correlating resistance-determined values of the current temperature can be saved in the table of values. To create the table of values, the electrical resistances and the correlating resistance-determined values of the current temperature can be measured, for example using measuring units, before the PTC heater is installed i.e. operated. By using the table of values, it can be ensured that the resistance-determined value of the current temperature can be determined i.e. read out with sufficient accuracy.

In the method, the pulse-width modulated input voltage is provided to the PTC heater and correspondingly to its PTC element. The input voltage is a DC voltage that is pulse-width modulated with a PWM signal (PWM: Pulse-Width Modulation). In particular, the PWM signal can be a square-wave signal. The heating power of the PTC heater can then be controlled by the duty cycle of the PWM signal. The control unit can have a corresponding switch - for example a semiconductor switch such as an IGBT - which switches the input voltage on and off according to the PWM signal.

When the PTC heater is operating at a duty cycle of the PWM signal below 100%, individual voltage pulses of the pulse-width modulated input voltage are applied to the PTC heater and correspondingly to its PTC element. The voltage level of the individual voltage pulses corresponds to the input voltage and the duration and frequency of the individual voltage pulses correspond to those of the PWM signal. At the PTC heater and its PTC element, the rise of the pulse-width modulated input voltage and the applying of the input voltage and the fall of the pulse-width modulated input voltage follow each other with each voltage pulse.

The electrical resistance of the PTC element can be calculated using the ohmic equation when the pulse-width modulated input voltage is applied to the PTC element. In particular, a voltage and a current can be measured at the same time as characteristic values of the PTC element when the pulse-width modulated input voltage is applied to the PTC element. The electrical resistance of the PTC element can then be calculated based on the measured current and the measured voltage using the ohmic equation. According to the ohmic equation, the electrical resistance corresponds to the ratio of the voltage and the current, so that the electrical resistance can be calculated easily. As described above, the resistance-determined value of the current temperature can then be determined using the calculated electrical resistance.

The capacitance of the PTC element can be calculated using a capacitance-dependent current-charge-curve during charging of the PTC element when the pulse-width modulated input voltage at the PTC element increases. In particular, a peak value of the current and a peak value of the voltage and a charging time can be measured as characteristic measured values of the PTC element when the pulse-width modulated input voltage at the PTC element increases. The capacitance of the PTC element can then be calculated based on the peak value of the current and the change of voltage during a defined time interval using the capacitance-dependent current-charge-curve. The change of voltage can be calculated based on the measured peak values of the voltage and the time interval dt can be calculated i.e. defined based on the measured i.e. detected charging time. According to the capacitance-dependent current-charge-curve, the following applies:

$$I = C \cdot \frac{dV}{dt},$$

where I is the peak value of the current, C is the capacitance of the PTC element, dt is a defined time interval and dV is the change of voltage during the defined time interval dt. The capacitance can be easily calculated from the capacitance-dependent current-charge-curve. As already described above, the capacitance-determined value of the current temperature can then be determined using the calculated capacitance.

The capacitance of the PTC element can be calculated using a capacitance-dependent voltage-discharge-curve during a discharge of the PTC element when the pulse-width modulated input voltage at the PTC element decreases. In particular, a first voltage can be measured at the first time and a second voltage can be measured at the second time when the pulse-width modulated input voltage at the PTC element decreases. The capacitance of the PTC element can then be calculated based on the first voltage and the second voltage using the capacitance-dependent voltage-discharge-curve. According to the capacitance-dependent voltage-discharge-curve, the following applies:

$$U(t) = U_0 e^{-\frac{t}{RC}},$$

where U(t) is the first/second voltage, $U_0$ is the input voltage, R is the electrical resistance of the PTC element, C is the capacitance of the PTC element and t is the first/second time. The resistance R can thereby be a value measured before or an already known value. The capacitance can be easily calculated using the capacitance-dependent voltage-discharge-curve. As described above, the capacitance-determined value of the current temperature can then be determined using the calculated capacitance. To simplify the determination of the capacitance, the first voltage can be measured at the PTC element at start of the decreasing of the pulse-width modulated input voltage.

The invention also relates to a PTC heater with at least one PTC element and a control unit. The control unit is provided to carry out the method described above. In particular, the control unit can contain software and/or hardware that can enable the method to be carried out.

In a first embodiment of the control unit, the control unit can contain a first measuring circuit for detecting current values and a second measuring circuit for detecting peak values of the current and/or the voltage at one of the PTC elements. The measuring circuits can be designed in such a way, that a peak value of the current and a peak value of the voltage and a charging time can be measured when the pulse-width modulated input voltage at the PTC element increases. The control unit can also contain a microcontroller for calculating the capacitance of the PTC element. The microcontroller can be designed in such a way, that the capacitance of the PTC element can be calculated based on the peak value of the current and the peak value of the voltage and the charging time using the capacitance-dependent current-charge-curve and the capacitance-determined value of the current temperature of the PTC element and thus of the PTC heater can be determined therefrom.

In a second embodiment of the control unit, the control unit can contain a measuring circuit for detecting voltages at one of the PTC elements and a switch for switching off the measuring circuit. The measuring circuit and the switch can be designed in such a way, that a first voltage can be measured at the first time and a second voltage can be measured at the second time when the pulse-width modulated input voltage at the PTC element decreases. In addition, the control unit can contain a microcontroller for calculating the capacitance of the PTC element. The microcontroller can be designed in such a way, that the capacitance of the PTC element can be calculated based on the first voltage and the second voltage using the capacitance-dependent voltage-discharge-curve and the capacitance-determined value of the current temperature of the PTC element and thus of the PTC heater can be determined therefrom.

In a third embodiment of the control unit, the control unit can contain a measuring circuit for detecting current and/or voltage at one of the PTC elements. The measuring circuit can be designed in such a way, that a voltage and a current can be measured at the PTC element at the same time when the pulse-width modulated input voltage is applied to the PTC element. Furthermore, the control unit can contain a microcontroller for calculating the electrical resistance of the PTC element. The microcontroller can be designed in such a way, that the electrical resistance of the PTC element can be calculated based on the current and the voltage using the ohmic equation and the resistance-determined value of the current temperature of the PTC element and thus of the PTC heater can be determined therefrom.

The individual embodiments of the control unit can be combined with each other. The measuring circuits of the individual embodiments can be combined with one another and/or integrated into one another, insofar as this is possible and/or useful. The microcontrollers of the individual embodiments can be combined with one another and/or integrated into one another, insofar as this is possible and/or useful. In particular, a single microcontroller can be provided for all embodiments present in the control unit.

Further important features and advantages of the invention are apparent from the sub-claims, from the drawings and from the associated description of the figures with reference to the drawings.

It is understood that the features mentioned above and those to be explained below can be used not only in the combination indicated in each case, but also in other combinations or on their own, without departing from the scope of the present invention.

Preferred embodiments of the invention are shown in the drawings and are explained in more detail in the following description, with identical reference signs referring to identical or similar or functionally identical components.

It shows, schematically in each case

Fig. 1    an exemplary resistance-temperature characteristic curve of a PTC element of a PTC heater in a method according to the invention;

Fig. 2    an exemplary capacitance-temperature characteristic curve of the PTC element of the PTC heater in the method according to the invention;

Fig. 3    a view of a PTC heater according to the invention with a control unit in a first embodiment;

Fig. 4    a view of the PTC heater according to the invention with the control unit in a second embodiment.

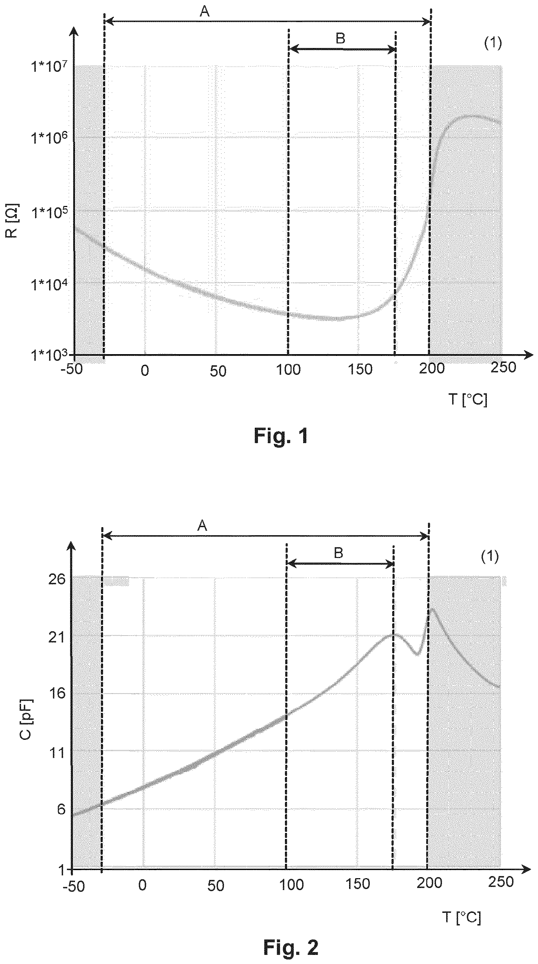

Fig. 1 shows an exemplary resistance-temperature characteristic curve of a PTC element of a PTC heater in a method 1 according to the invention. Fig. 2 shows an exemplary capacitance-temperature characteristic curve of the PTC element of the PTC heater in the method 1 according to the invention. In the method 1 according to the invention, a pulse-width modulated input voltage $U_0$ is provided to the PTC heater during operation and characteristic values of the PTC element are measured.

With reference to Fig. 1, an electrical resistance R of the PTC element is calculated from at least some of the measured characteristic values and a resistance-determined value of the current temperature T of the PTC element is determined from the calculated electrical resistance R. The electrical resistance R can, for example, be calculated from the voltage and the current using the ohmic equation. The resistance-determined value of the current temperature T of the PTC element can then be read out from a previously determined table of values which reflects the resistance-temperature characteristic curve of the PTC element. The resistance-determined value of the current temperature T of the PTC element is determined in a first range A - here the entire range - of the operating temperature of the PTC heater between -25 °C and 200 °C.

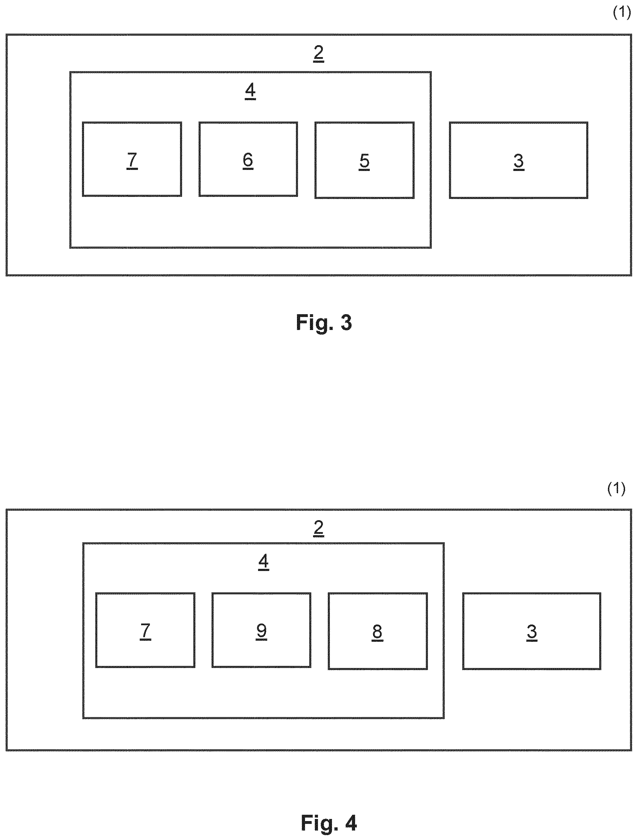

With reference to Fig. 2, a capacitance C of the PTC element is calculated from at least some of the measured characteristic values and a capacitance-determined value of the current temperature T of the PTC element is determined from the calculated capacitance C. The calculation of the capacitance C is explained in more detail based on Fig. 3 and Fig. 4. The capacitance-determined value of the current temperature T of the PTC element can then be read out from a previously determined table of values which reflects the capacitance-temperature characteristic curve of the PTC element. The capacitance-determined value of the current temperature T of the PTC element is determined in a second range B - in this case a part of the entire range - of the operating temperature of the PTC heater between 100 °C and 160 °C.

As can be seen in Fig. 1 and Fig. 2, the resistance-temperature characteristic curve of the PTC element and the capacitance-temperature characteristic curve of the PTC element differ considerably. In area B, the resistance-temperature characteristic curve of the PTC element is flat, so that the resistance-determined value of the current temperature T can be determined with a high tolerance only. In contrast, the capacitance-temperature characteristic curve of the PTC element in range B is steep and linear, so that the capacitance-determined value of the current temperature T can be determined with a low tolerance. As a result, the capacitance-determined value of the current temperature T of the PTC element can be determined more accurately than the resistance-determined value of the current temperature T of the PTC element. Thus, the capacitance-determined value of the current temperature T can be used in the range B and the resistance-determined value of the current temperature T can be used in the remaining range A to control the PTC heater. Thus, in the entire range A, the current temperature T can be determined with a sufficiently low tolerance and the PTC heater can be controlled precisely.

Fig. 3 shows a view of a PTC heater 2 according to the invention in a first embodiment. The PTC heater contains at least one PTC element 3 - only one is shown here - and a control unit 4 for carrying out the method 1 described above. In the first embodiment of the PTC heater 2, the control unit 4 comprises a first measuring circuit 5 for detecting current values and a second measuring circuit 6 for detecting peak values of the current and/or the voltage at the PTC element 3. Furthermore, the control unit 4 comprises a microcontroller 7 for calculating the capacitance of the PTC element 3. The first measuring circuit 5, the second measuring circuit 6 and the microcontroller 7 can be arranged on a PCB (PCB: Printed Circuit Board).

In method 1, a pulse-width modulated input voltage $U_0$ is provided to the PTC heater 2 and correspondingly to the PTC element 3. The input voltage $U_0$ is a DC voltage that is pulse-width modulated with a PWM signal. In particular, the PWM signal can be a square-wave signal. During operation of the PTC heater 2 with a duty cycle of the PWM signal below 100%, individual voltage pulses of the pulse-width modulated input voltage $U_0$ are applied to the PTC heater 2 i.e. its PTC element 3. At the PTC heater 2 i.e. at its PTC element 3, the increase of the input voltage $U_0$ and the applying of the input voltage $U_0$ and the decrease of the input voltage $U_0$ follow each other with each voltage pulse.

As the pulse-width modulated input voltage $U_0$ increases, the current at PTC element 3 follows the capacitance-dependent current-charge-curve:

$$I = C \cdot \frac{dV}{dt} \, ,$$

where I is the peak value of the current, C is the capacitance of the PTC element, dt is a defined time interval and dV is the change of voltage during the defined time interval dt. The control unit 4 can measure the peak value I of the current and the change dV of the voltage and the time t when the pulse-width modulated input voltage $U_0$ at the PTC element 3 increases. Furthermore, the control unit 4 can calculate the capacitance C of the PTC element 3 based on the measured values using the capacitance-dependent current-charge-curve and determine the capacitance-determined value of the current temperature T of the PTC element 3.

For this purpose, the first measuring circuit 5 of the control unit 4 can be a shunt or a Hall sensor, for example, which converts the current into an output voltage. The second measuring circuit 6 of the control unit 4 can contain a capacitor that is charged by the output voltage generated at the first measuring circuit 5. The peak value of the voltage present at the capacitor of the second measuring circuit 6 can then be read out by the microcontroller 7. The second measuring circuit 6 can be designed in such a way, that the discharge time of its capacitor is synchronized with the time read out by the microcontroller 7. Alternatively, the second measuring circuit 6 can comprise a discharge switch which is triggered by the microcontroller 7 after the charge state of the capacitor of the second measuring circuit 6 has been read out. Furthermore, the second measuring circuit 6 can detect the peak value I of the current. Since the peak value I of the current appears in a defined time window, this window can be synchronized with a current measurement and the peak value I of the current can be measured directly. This measurement takes place in a precise time window and the first measuring circuit 5 can be adapted to this time window.

Based on the peak value I of the current, the peak value of the voltage and the charging time, the capacitance C of the PTC element 3 can be calculated by the microcontroller 7 in accordance with the current-charging-curve specified above. The microcontroller 7 can then read out the capacitance-determined value of the current temperature T from the table of values previously determined for the PTC heater 2 depending on the calculated capacitance C.

Fig. 4 shows a view of the PTC heater 2 according to the invention with the control unit 4 in a second embodiment. In the second embodiment of the PTC heater 2, the control unit 4 comprises a measuring circuit 8 for detecting voltages at the PTC element 3 and a switch 9 for switching off the measuring circuit 8. Furthermore, the control unit 4 comprises the microcontroller 7. The measuring circuit 8 is arranged between the switch 9 and the PTC element 3 in order to ensure that other capacitances, for example of another capacitor or a battery - such as an HV battery of the vehicle - do not disturb the measurements. The measuring circuit 8, the switch 9 and the microcontroller 7 can be arranged on a PCB.

In method 1, a pulse-width modulated input voltage $U_0$ is provided to the PTC heater 2 and correspondingly to the PTC element 3. As already described above, the increase of the input voltage $U_0$ and the applying of the input voltage $U_0$ and the decrease of the input voltage $U_0$ follow each other with each voltage pulse.

When the pulse-width modulated input voltage $U_0$ decreases, the voltage at PTC element 3 follows the capacitance-dependent voltage-discharge-curve:

$$U(t) = U_0 e^{-\frac{t}{RC}} \, ,$$

where U(t) is the current voltage, $U_0$ is the input voltage, R is the electrical resistance of the PTC element, C is the capacitance of the PTC element and t is the current time. The control unit 4 can measure a first voltage at the first time and a second voltage at the second time when the pulse-width modulated input voltage $U_0$ decreases at the PTC element 3. Furthermore, the control unit 4 can calculate the current capacitance C of the PTC element 3 based on these values using the capacitance-dependent voltage-discharge-curve and determine the capacitance-determined value of the current temperature T of the PTC element 3.

For this purpose, the measuring circuit 8 of the control unit 4 can measure the first voltage at the first time and the second voltage at the second time. The difference between the two voltages can be used by the microcontroller 7 to calculate the capacitance C of the PTC element 3 using the voltage-discharge-curve described above. The microcontroller 7 can then read out the capacitance-determined value of the current temperature T from the table of values previously determined for the PTC heater 2 depending on the calculated capacitance C.

**Claims**

1. Method (1) for determining a current temperature (T) of a PTC heater (2) with at least one PTC element (3) during operation of the PTC heater (2) by means of a control unit (4),

- wherein during operation of the PTC heater (2), a pulse-width modulated input voltage is applied to the PTC heater (2),

- wherein during operation of the PTC heater (2), characteristic values of one of the PTC elements (3) of the PTC heater (2) are measured,

**characterized**

- **in that** a capacitance (C) of the PTC element (3) is calculated from at least some of the measured characteristic values of the PTC element (3), and

- **in that** a capacitance-determined value of the current temperature (T) of the PTC element (3) and thus of the PTC heater (2) is determined from the calculated capacitance (C).

2. Method (1) according to claim 1,
**characterized**
**in that** when determining the capacitance-determined value of the current temperature (T), this is read out from a table of values determined for the PTC heater (2) as a function of the capacitance (C).

3. Method (1) according to claim 1 or 2,
characterized

- wherein an electrical resistance (R) of the PTC element (3) is calculated from at least some of the measured characteristic values of the PTC element (3), and

- wherein a resistance-determined value of the current temperature (T) of the PTC element (3) and thus of the PTC heater (2) is determined from the calculated electrical resistance (R),

4. Method (1) according to claim 3,
**characterized**

- **in that** the resistance-determined value of the current temperature (T) is determined in a first range (A) of the operating temperature of the PTC heater (2) and the capacitance-determined value of the current temperature (T) is determined in a second range (B) of the operating temperature of the PTC heater (2), and

- **in that** the first range (A) and the second range (B) of the operating temperature of the PTC heater (2) overlap.

5. Method (1) according to claim 3 or 4,
**characterized**

- **in that** the resistance-determined value of the current temperature (T) is determined in the entire range (A) of the operating temperature of the PTC heater (2), and

- **in that** the capacitance-determined value of the current temperature (T) is determined in a range (B) of the operating temperature of the PTC heater (2) in which a tolerance of the resistance-determined value of the current temperature (T) exceeds a predefined tolerance value.

6. Method (1) according to any one of claims 3 to 5,
**characterized**

- **in that** when determining the resistance-determined value of the current temperature (T), this is read out from a table of values determined for the PTC heater (2) as a function of the electrical resistance (R), and/or

7. Method (1) according to any one of claims 3 to 6,
**characterized**
**in that**, when the pulse-width modulated input voltage is applied to the PTC element (3), the electrical resistance (R) of the PTC element (3) is calculated using the ohmic equation.

8. Method (1) according to claim 7,
**characterized**

- **in that**, when the pulse-width modulated input voltage is applied to the PTC element (3), a voltage and a current are measured at the same time at the PTC element (3) as characteristic values, and

- **in that** the electrical resistance (R) of the PTC element (3) is calculated based on the measured current and the measured voltage using the ohmic equation.

9. Method (1) according to one of the preceding claims,
**characterized**
**in that**, during charging of the PTC element (3) when the pulse-width modulated input voltage at the PTC element (3) increases, the capacitance (C) of the PTC element (3) is calculated using a capacitance-dependent current-charge-curve.

10. Method (1) according to claim 9,
**characterized**

- **in that**, when the pulse-width modulated input voltage at the PTC element (3) increases, a peak value of the current and a peak value of the voltage and a charging time are measured at the PTC element (3) as characteristic values, and

- **in that** the capacitance (C) of the PTC element (3) is calculated based on the peak value of the current and the peak value of the voltage and the charging time using the capacitance-dependent current-charge-curve.

11. Method (1) according to one of the preceding claims, **characterized in that**, during a discharge of the PTC element (3) when the pulse-width modulated input voltage at the PTC element (3) decreases, the capacitance (C) of the PTC element (3) is calculated using a capacitance-dependent voltage-discharge-curve.

12. Method (1) according to claim 11, **characterized**

- **in that**, when the pulse-width modulated input voltage at the PTC element (3) decreases, a first voltage at a first time and a second voltage at a second time are measured at the PTC element (3) as characteristic values, and
- **in that** the capacitance (C) of the PTC element (3) is calculated based on the first voltage and the second voltage using the capacitance-dependent voltage-discharge-curve.

13. Method (1) according to claim 9, **characterized in that** that the first voltage is measured at the PTC element (3) at start of the decreasing of the pulse-width modulated input voltage.

14. PTC heater (2) with at least one PTC element (3) and a control unit (4), wherein the control unit (4) is provided to carry out the method (1) according to any one of the preceding claims.

15. PTC heater (2) according to claim 13, **characterized**

- **in that** the control unit (4) contains a first measuring circuit (5) for detecting current values and a second measuring circuit (6) for detecting peak values of the current and/or the voltage at one of the PTC elements (3), and
- **in that** the first measuring circuit (5) and the second measuring circuit (6) are designed in such a way, that a peak value of the current and a peak value of the voltage and a charging time can be measured when the pulse-width modulated input voltage at the PTC element (3) increases, and
- **in that** the control unit (4) contains a microcontroller (7) for calculating the capacitance (C) of the PTC element (3), and
- **in that** the microcontroller (7) is designed such a way, that the capacitance (C) of the PTC element (3) can be calculated based on the peak value of the current and the peak value of the voltage and the charging time using the capacitance-dependent current-charge-curve and the capacitance-determined value of the current temperature (T) of the PTC element (3) and thus of the PTC heater (2) can be determined therefrom.

16. PTC heater (2) according to claim 14 or 15, **characterized**

- **in that** the control unit (4) contains a measuring circuit (8) for detecting voltages at one of the PTC elements (3) and a switch (9) for switching off the measuring circuit (8),
- **in that** the measuring circuit (8) and the switch (9) are designed in such a way, that a first voltage can be measured at a first time and a second voltage can be measured at a second time when the pulse-width modulated input voltage decreases at the PTC element (3),
- **in that** the control unit (4) contains a microcontroller (7) for calculating the capacitance (C) of the PTC element (3), and
- **in that** the microcontroller (7) is designed in such a way, that the capacitance (C) of the PTC element (3) can be calculated based on the first voltage and the second voltage using the capacitance-dependent voltage-discharge-curve and the capacitance-determined value of the current temperature (T) of the PTC element (3) and thus of the PTC heater (2) can be determined therefrom.

17. PTC heater (2) according to any one of claims 14 to 16, **characterized**

- **in that** the control unit (4) contains a measuring circuit for detecting current and/or voltage at one of the PTC elements (3),
- **in that** the measuring circuit is designed in such a way, that a voltage and a current can be measured at the PTC element (3) at the same time when the pulse-width modulated input voltage is applied to the PTC element (3),
- **in that** the control unit (4) contains a microcontroller for calculating the electrical resistance (R) of the PTC element (3), and
- **in that** the microcontroller is designed in such a way, that the electrical resistance (R) of the PTC element (3) can be calculated based on the current and the voltage using the ohmic equation and the resistance-determined value of the current temperature (T) of the PTC element (3) and thus of the PTC heater (2) can be determined therefrom.

**Fig. 1**

**Fig. 2**

EP 4 660 598 A1

(1)

Fig. 3

(1)

Fig. 4

10

Europäisches
Patentamt

European
Patent Office

Office européen
des brevets

# EUROPEAN SEARCH REPORT

**Application Number**

EP 24 18 0739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 130746 A1 (VALEO SCHALTER & SENSOREN GMBH [DE]) 20 May 2021 (2021-05-20) * paragraphs [0001], [0005], [0007], [0008], [0022], [0023], [0035], [0037], [0038], [0063], [0083] * | 1-17 | INV. G01K7/22 G01K7/34 H05B1/00 |
| X | FR 2 806 794 A1 (CANON RES CT FRANCE SA [FR]) 28 September 2001 (2001-09-28) * page 1, lines 11-12 * * page 3, lines 18-31 * * page 6, line 30 - page 8, line 2 * | 1-17 | |
| A | US 2013/098890 A1 (VIRNICH MICHAEL [DE] ET AL) 25 April 2013 (2013-04-25) * paragraphs [0001], [0013], [0014], [0017], [0029] * | 1-17 | |
| A | PREIS WOLFGANG ET AL: "Electrical properties of grain boundaries in interfacially controlled functional ceramics", JOURNAL OF ELECTROCERAMICS, [Online] vol. 34, no. 2-3, 30 November 2014 (2014-11-30), pages 185-206, XP093221654, US ISSN: 1385-3449, DOI: 10.1007/s10832-014-9972-7 Retrieved from the Internet: URL:https://link.springer.com/content/pdf/ 10.1007/s10832-014-9972-7.pdf?utm_source=s copus&getft_integrator=scopus> [retrieved on 2024-11-06] * 2.2 PTC thermistors, and 4.1 Relative permittivity as a function of temperature; page 185, right-hand column, lines 16-21; figures 3(a),3(b) * | 1-17 | TECHNICAL FIELDS SEARCHED (IPC) G01K H05B H01C |

The present search report has been drawn up for all claims

| Place of search | Date of completion of the search | Examiner |
|---|---|---|
| The Hague | 7 November 2024 | Phleps, Stefanie |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 18 0739

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2024

| Patent document cited in search report | Publication date | Patent family member(s) | | Publication date |
|---|---|---|---|---|
| DE 102019130746 A1 | 20-05-2021 | NONE | | |
| FR 2806794 A1 | 28-09-2001 | NONE | | |
| US 2013098890 A1 | 25-04-2013 | EP | 2572929 A1 | 27-03-2013 |
| | | LU | 91879 B1 | 22-03-2013 |
| | | US | 2013098890 A1 | 25-04-2013 |

EPO FORM P0459

For more details about this annex : see Official Journal of the European Patent Office, No. 12/82